# EUROPEAN PATENT APPLICATION

(11) **EP 4 620 782 A1**
(43) Date of publication of application: **24.09.2025**
(21) Application number: 24200183.2
(22) Date of filing: 13.09.2024
(51) Int. Cl.: B62D 21/00, B62D 55/24

(54) **ELASTIC CRAWLER**

(30) Priority: 19.03.2024 JP 2024043065
(71) Applicant: Zenith Track Co., Ltd., Daejeon 34178 (KR)
(72) Inventor: CHOI, Yong Jae, Daejeon (KR)
(74) Representative: RGTH

(57) **Abstract**

To easily secure the strength required to prevent lateral slip between core metals of a crawler main body and to prevent a decrease in durability and vibration absorption performance of the crawler main body.

An intermediate track roller rolling portion 28, 29 is provided on a core metal 7 between a lateral slip preventing protrusion on one side 26 and a lateral slip preventing protrusion on the other side 27. Each of the lateral slip preventing protrusions 26 and 27 has a horizontally long shape in which a dimension B in a crawler width direction from a lateral slip preventing surface side 26b, 27b to an anti-lateral slip preventing surface side 26c, 27c is longer than a dimension A from a tread side 26a, 27a to a track roller rolling portion 28, 29.

## Description

### TECHNICAL FIELD

The present invention relates to an elastic crawler used by being attached to a crawler device of a construction machine or the like.

### BACKGROUND ART

An elastic crawler used in a crawler device includes a crawler main body mainly composed of an elastic material, such as rubber, and core metals embedded at substantially equal intervals in a crawler revolving direction inside the crawler main body (Patent Document 1).

The core metals each include an engaging portion that is arranged between engaging holes of the crawler main body, guide protrusions that are arranged on both sides in a crawler width direction with respect to the engaging portion, a lateral slip preventing protrusion on one side that projects to one side in the crawler revolving direction on an outer side in the crawler width direction with respect to each of the guide protrusions, and a lateral slip preventing protrusion on the other side that projects to the other side in the crawler revolving direction on the outer side in the crawler width direction with respect to each of the guide protrusions and prevents lateral slip of the core metals adjacent to each other to the crawler width direction between itself and the lateral slip preventing protrusion on one side on the core metal side adjacent thereto, and the lateral slip preventing protrusion on one side and the lateral slip preventing protrusion on the other side have anti-tread sides formed into track roller rolling surfaces, and an intermediate track roller rolling portion is provided on the core metal between the lateral slip preventing protrusion on one side and the lateral slip preventing protrusion on the other side.

Each of the lateral slip preventing protrusions has a prismatic shape in which a dimension in the crawler width direction is larger than a dimension in the crawler thickness direction, and projects from the core metal such that the lower surface side of the lateral slip preventing protrusion coincides with the lower surface of a blade portion of the core metal. A projecting track roller rolling portion having an upper surface side serving as a track roller rolling path and having a narrow dimension in the crawler width direction is provided on an upper outer side of the lateral slip preventing protrusion.

### PRIOR ART DOCUMENT

[Patent Document 1] Japanese Published Unexamined Patent Application No. 2022-28048

### SUMMARY OF THE INVENTION

In the conventional elastic crawler, the track roller rolling portions are integrally provided on the lateral slip preventing protrusions to ensure a predetermined mechanical strength according to the functions of the lateral slip preventing protrusions and the track roller rolling portions. Thus, there is an advantage that lateral slip in the crawler width direction can be prevented between the core metals adjacent to each other.

However, the dimension in the crawler thickness direction of the whole including the lateral slip preventing protrusion and the track roller rolling portion becomes significantly large, so that the lateral slip preventing protrusion and the track roller rolling portion having the large dimension in the crawler thickness direction are repeatedly bent inside the elastic material of the crawler main body when the crawler main body is bent between the core metals adjacent to each other. Thus, there is a problem that places of the crawler main body corresponding to pointed end sides of the lateral slip preventing portions and the track roller rolling portions are more easily cracked and the durability of the crawler main body is decreased.

Particularly, in addition to that the lateral slip preventing protrusions and the track roller rolling portions largely project to both sides in the crawler revolving direction from the core metals so as to overlap each other in the crawler revolving direction between the adjacent core metals, the dimension in the crawler width direction of the track roller rolling portions on the lateral slip preventing protrusions is narrow. Thus, the crawler main body is more easily cracked due to the track roller rolling portions.

Further, the dimension in the crawler thickness direction of the whole including the track roller rolling portion on the lateral slip preventing portion becomes significantly large, so that there are problems that the thickness of the elastic material constituting drive lugs on the tread side of the crawler main body becomes small and the durability is decreased or vibration absorption performance is decreased due to damage to the elastic material on that part.

In view of such conventional problems, an object of the present invention is to provide an elastic crawler that can easily ensure the strength required to prevent lateral slip between the core metals of the crawler main body and can prevent a decrease in durability and vibration absorption performance of the crawler main body.

The present invention is an elastic crawler including a crawler main body mainly composed of an elastic material, and core metals embedded at substantially equal intervals in a crawler revolving direction inside the crawler main body, the core metals each having an engaging portion that is arranged between engaging holes of the crawler main body, guide protrusions that are arranged on both sides in a crawler width direction with respect to the engaging portion, a lateral slip preventing protrusion on one side that projects to one side in a crawler revolving direction on an outer side in the crawler width direction with respect to each of the guide protrusions, and a lateral slip preventing protrusion on the other side that projects to the other side in the crawler revolving direction on the outer side in the crawler width direction with respect to each of the guide protrusions and prevents lateral slip of the core metals to the crawler width direction between itself and the lateral slip preventing protrusion on one side on the core metal side adjacent thereto, the lateral slip preventing protrusion on one side and the lateral slip preventing protrusion on the other side having anti-tread sides formed into track roller rolling portions, wherein an intermediate track roller rolling portion is provided on the core metal between the lateral slip preventing protrusion on one side and the lateral slip preventing protrusion on the other side, and wherein each of the lateral slip preventing protrusions is formed in a horizontally long shape in which a dimension in the crawler width direction from a lateral slip preventing surface side to an anti-lateral slip preventing surface side is longer than a dimension from a tread side to the track roller rolling portion.

It is desirable that the track roller rolling portion of the lateral slip preventing protrusion on one side and the track roller rolling portion of the lateral slip preventing protrusion on the other side have their tip sides overlapping each other in the crawler revolving direction.

It is desirable that the intermediate track roller rolling portion is provided in a projecting manner on a blade portion of the core metal between the lateral slip preventing protrusion on one side and the lateral slip preventing protrusion on the other side, and that each of the lateral slip preventing protrusions has a base portion side integrated with an upper surface of the blade portion and a side surface of the intermediate track roller rolling portion, and that the tread side of each of the lateral slip preventing protrusions is an inclined surface inclined upward toward a tip thereof.

The present invention has advantages that the strength required to prevent lateral slip between the core metals of the crawler main body can be easily secured and a decrease in durability and vibration absorption performance of the crawler main body can be prevented.
[FIG. 1] FIG. 1 is a side view of a crawler device showing a first embodiment of the present invention.
[FIG. 2] FIG. 2 is a plane perspective view of an elastic crawler of the same.
[FIG. 3] FIG. 3 is a plan view of the elastic crawler of the same.
[FIG. 4] FIG. 4 is a front cross-sectional view of the elastic crawler of the same.
[FIG. 5] FIG. 5 is a side cross-sectional view of the elastic crawler of the same.
[FIG. 6] FIG. 6 is a side cross-sectional view of an outer track roller rolling path side of the elastic crawler of the same.
[FIG. 7] FIG. 7 is a bottom view of the elastic crawler of the same.
[FIG. 8] FIG. 8 is a bottom perspective view of the elastic crawler of the same.
[FIG. 9] FIG. 9(a) is a plan view of core metals of the same and FIG. 9(b) is a front view of the core metal of the same.
[FIG. 10] FIG. 10 is a perspective view of the core metals of the same.
[FIG. 11] FIG. 11 is a bottom view of an elastic crawler showing a second embodiment of the present invention.
[FIG. 12] FIG. 12 is a bottom view of an elastic crawler showing a third embodiment of the present invention.
[FIG. 13] FIG. 13 show a fourth embodiment of the present invention, and FIG. 13(a) is a front cross-sectional view of a lateral slip preventing protrusion, and FIG. 13(b) is a side cross-sectional view of the same lateral slip preventing protrusion.
[FIG. 14] FIG. 14 show a fifth embodiment of the present invention, and FIG. 14(a) is a front view of lateral slip preventing protrusions, and FIG. 14(b) is a front view of different lateral slip preventing protrusions.

### [Modes for Carrying Out the Invention]

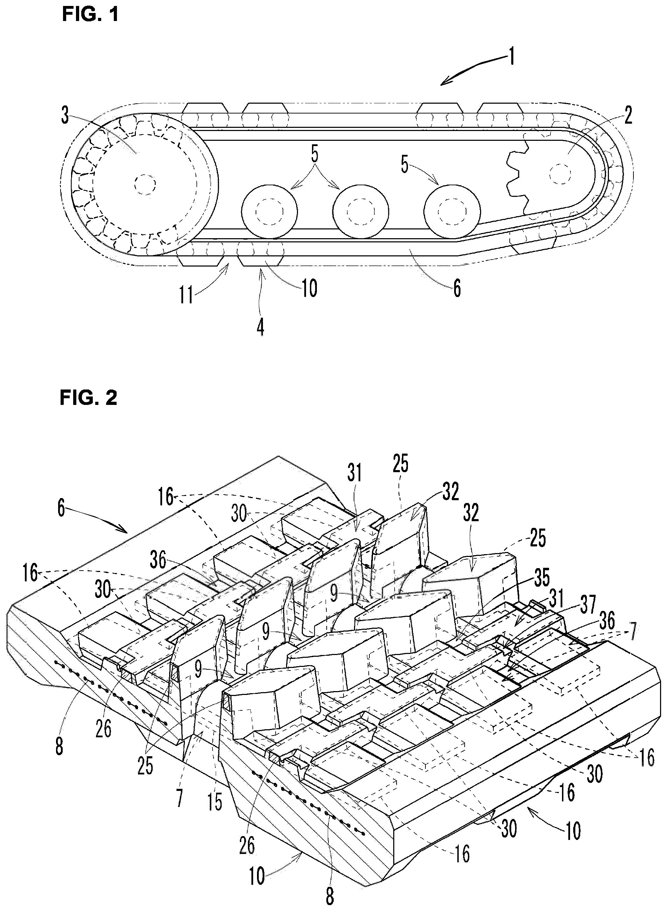

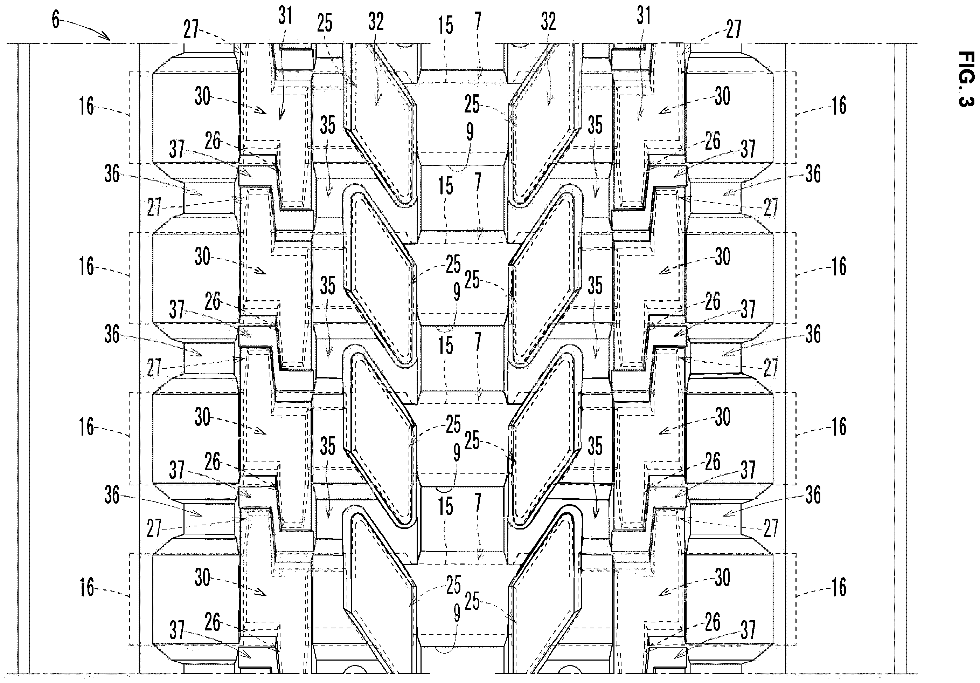

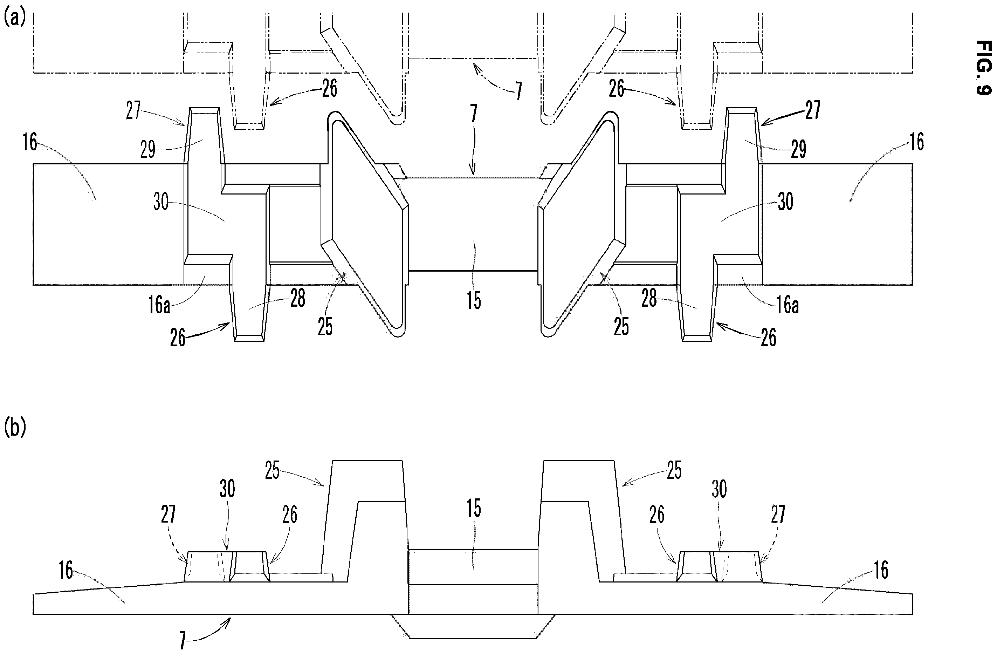

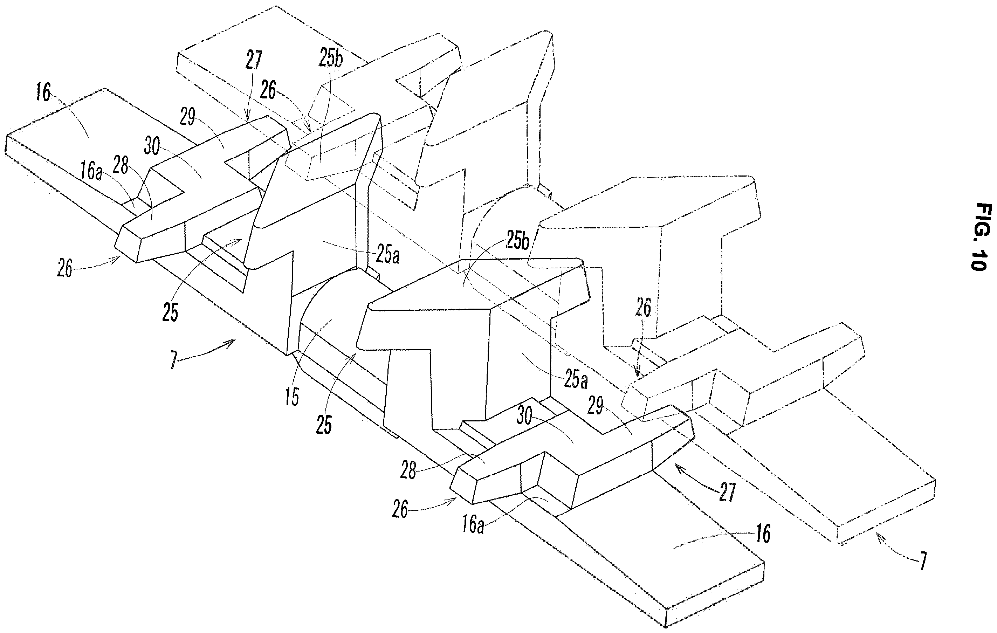

Hereinafter, each embodiment of the present invention will be described in detail based on the drawings. FIG. 1 to FIG. 10 illustrate a first embodiment of the present invention. As shown in FIG. 1, a crawler device 1 includes a driving wheel 2 and a driven wheel 3 made of sprockets and arranged at the front and rear, and an elastic crawler 4 revolvably wound across the driving wheel 2 and the driven wheel 3. A plurality of track rollers 5 for guiding the elastic crawler 4 are arranged between the driving wheel 2 and the driven wheel 3.

As shown in FIG. 2 to FIG. 6, the elastic crawler 4 includes an endless belt shaped crawler main body 6 mainly composed of an elastic material 12, core metals 7 of a crawler width direction embedded at substantially equal intervals in a crawler revolving direction inside the crawler main body 6, and tension members 8, such as steel wires, embedded in the crawler revolving direction inside the crawler main body 6 on tread sides of the core metals 7.

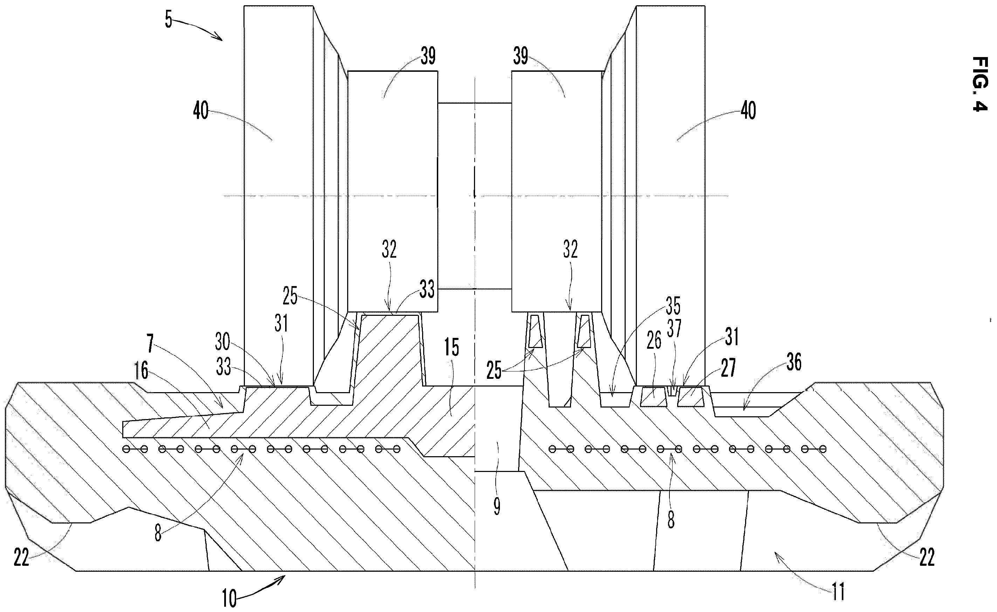

As shown in FIG. 4, FIG. 7, and FIG. 8, the crawler main body 6 is provided with an engaging hole 9 between each of the core metals 7 at the center in the crawler width direction, and drive lugs 10 and inter-lug recesses 11 formed between each of the drive lugs 10 are arranged on the tread side alternately in a staggered manner in the crawler revolving direction.

The drive lugs 10 each include a central lug portion 13 of the crawler width direction arranged between the engaging holes 9 corresponding to each core metal 7, and a side lug portion 14 arranged on one side in the crawler width direction with respect to the central lug portions 13. The inter-lug recess 11 is arranged on the other side in the crawler width direction with respect to the central lug portions 13. Thus, the side lug portions 14 are alternately arranged on one side in the crawler width direction with respect to the central lug portions 13, and the inter-lug recesses 11 are arranged alternately on the other side in the crawler width direction with respect to the central lug portions 13. The side lug portions 14 and the inter-lug recesses 11 are alternately arranged in the crawler revolving direction and the crawler width direction.

The central lug portion 13 has a length slightly longer than the dimension in the crawler width direction of the engaging hole 9, and is provided substantially parallel to the crawler width direction, corresponding to an engaging portion 15 of each core metal 7. The side lug portions 14 are alternately arranged on either side in the crawler width direction, corresponding to the respective central lug portion 13.

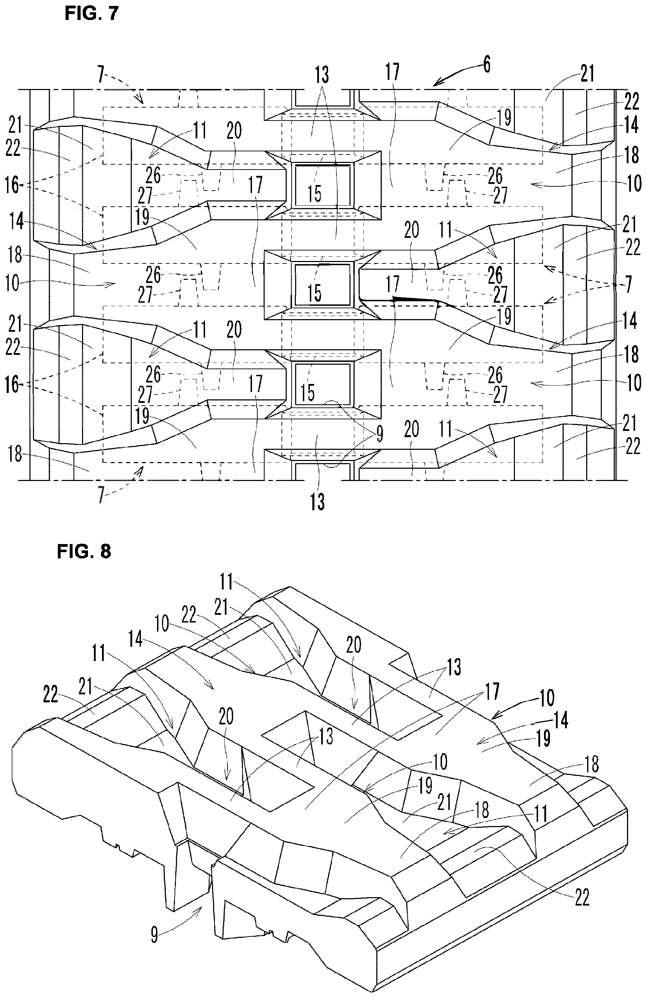

In each side lug portion 14, a wide lug portion 17 having a wide width and straddling substantially both ends of blade portions 16 of two core metals 7 adjacent to each other in the crawler revolving direction is provided on a side closer to the central lug portions 13, and a narrow lug portion 18 narrower than the wide lug portion 17 and straddling between intermediate portions of the blade portions 16 of the two core metals 7 is provided on a side farther from the central lug portions 13. The wide lug portion 17 and the narrow lug portion 18 are integrally connected via a boundary lug portion 19 whose width changes from the wide lug portion 17 to the narrow lug portion 18. As shown in FIG. 7, the wide lug portion 17 has a lug top portion having a width substantially corresponding to the maximum dimension, which is the distance between the outer sides of the blade portions 16 of the two core metals 7, and the narrow lug portion 18 has a lug top portion having a width substantially corresponding to the distance between the intermediate portions of the blade portions 16 of the two core metals 7.

The inter-lug recesses 11 are recesses for characterizing the rise of the side lug portions 14 from the tread of the crawler main body 6, are each located between the side lug portions 14 on both sides in the crawler revolving direction, and are arranged with the engaging holes 9 therebetween in the crawler width direction. The inter-lug recesses 11 each include a narrow recess 20 arranged on the side closer to the engaging hole 9 and substantially as narrow as or narrower than the distance between two central lug portions 13, and a wide recess 21 outside the narrow recess 20 and wider than the narrow recess 20. On the wide recess 21 side, a bite preventing projection 22 for preventing stones, mud, or the like from getting caught between the side lug portions 14 is provided in the crawler revolving direction. The bite preventing projection 22 is slightly lower in height than the side lug portion 14. The drive lugs 10, the inter-lug recesses 11, and the bite preventing projections 22 are substantially symmetrical to a center line in the crawler width direction passing through the center of the engaging holes 9.

The core metals 7 are made by casting or forging, and as shown in FIG. 7 and FIG. 8, each include the engaging portion 15 that is arranged between the engaging holes 9 of the crawler main body 6 and engages with engaging projections on outer peripheries of the driving wheel 2 and the driven wheel 3, guide protrusions 25 that project in a crawler thickness direction from both sides in the crawler width direction of the engaging portion 15 toward an anti-tread side and guide the driving wheel 2 and the driven wheel 3 from both sides, flat blade portions 16 that project outward in the crawler width direction from the respective guide protrusions 25, and a lateral slip preventing protrusion on one side 26 and a lateral slip preventing protrusion on the other side 27 that project toward both sides in the crawler revolving direction from the respective blade portions 16. The core metals 7 may be manufactured by a method other than casting or forging.

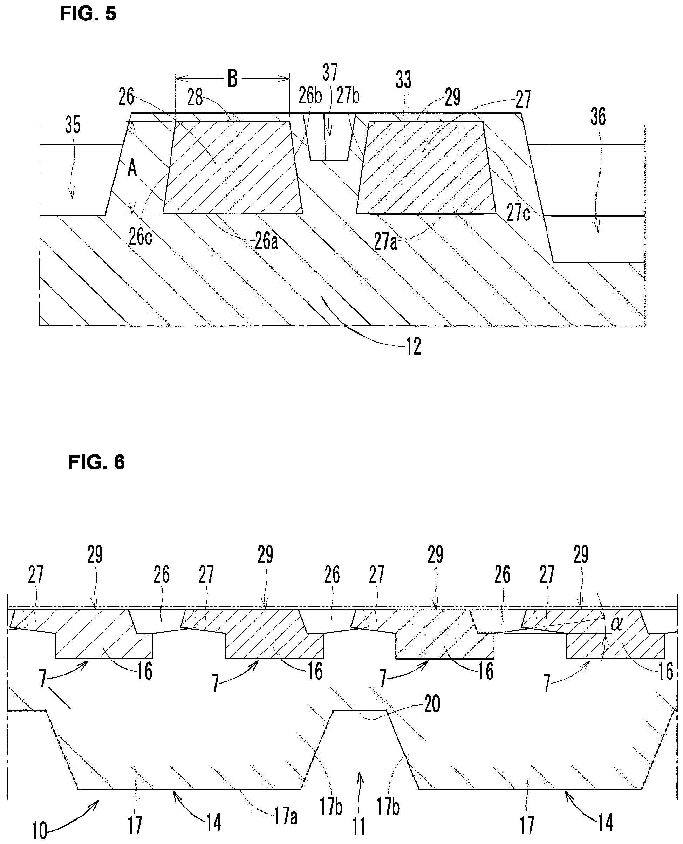

As shown in FIG. 5, FIG. 9, and FIG. 10, the lateral slip preventing protrusion on one side 26 and the lateral slip preventing protrusion on the other side 27 also serve as track roller rolling portions 28 and 29, and their anti-tread sides are the flat track roller rolling portions 28 and 29. Between the lateral slip preventing protrusion on one side 26 and the lateral slip preventing protrusion on the other side 27, an intermediate track roller rolling portion 30 flush with the track roller rolling portions 28 and 29 is provided in a projecting manner on the anti-tread side of the blade portion 16 of the core metal 7, and the track roller rolling portions 28 and 29 and the intermediate track roller rolling portion 30 constitute an outer track roller rolling path 31 for rolling of the track rollers 5. The intermediate track roller rolling portion 30 has a rectangular shape in plan view.

As shown in FIG. 5, each of the lateral slip preventing protrusions 26 and 27 has a horizontally long rectangular shape or horizontally long flat shape in which a dimension B in the crawler width direction from a lateral slip preventing surface side 26b, 27b to an anti-lateral slip preventing surface side 26c, 27c opposite thereto is longer than a dimension A from the tread side 26a, 27a to the track roller rolling portion 28, 29. By configuring the lateral slip preventing protrusions 26 and 27 to have the horizontally long rectangular shape or horizontally long flat shape in this way, a predetermined strength can be secured while keeping the dimension A in the crawler thickness direction of the lateral slip preventing protrusions 26 and 27 small. The tread side 26a, 27a of each lateral slip preventing protrusion 26, 27 is inclined upward toward the tip at a gentle angle α (see FIG. 6) from the upper surface side 16a of the blade portion 16 of the core metal 7 to the tip side.

The lateral slip preventing protrusion on one side 26 and the lateral slip preventing protrusion on the other side 27 are arranged so as to project in the opposite directions to both sides in the crawler rotating direction from both sides in the crawler width direction of the intermediate track roller rolling portion 30. The lateral slip preventing protrusion on one side 26 of one of the adjacent core metals 7 and the lateral slip preventing protrusion on the other side 27 of the other core metal 7 are arranged side by side in the crawler width direction, and overlap each other in the crawler revolving direction by a predetermined amount so that the tip sides thereof do not come apart even when the adjacent core metals 7 are relatively bent in a mountain-fold shape or a valley-fold shape.

The tread side 26a, 27a of each lateral slip preventing protrusion 26, 27 is arranged at an intermediate position of about half of the dimension in the crawler thickness direction from the upper surface side 16a of the blade portion 16 of the core metal 7, that is, the tread side of the blade portion 16, to the central track roller rolling portion 30, and is an inclined surface inclined upward toward the tip at an angle α from the intermediate position to the tip side. The tread side 26a, 27a of the lateral slip preventing protrusion 26, 27 is inclined at the angle α, but may be parallel to the track roller rolling portion 28, 29 of the lateral slip preventing protrusion 26, 27 or be an inclined surface at an angle nearly parallel thereto.

As shown in FIG. 6 and FIG. 7, the lateral slip preventing protrusions 26 and 27 between each of the core metals 7 are arranged corresponding to the side lug portion 14 and the inter-lug recess 11. That is, a pair of lateral slip preventing protrusions 26 and 27 on the side lug portion 14 side are arranged corresponding to the wide lug portion 17 so that the whole in the crawler revolving direction thereof corresponds to the inside of the side lug portion 14, or correspond to a wide portion of the boundary lug portion 19 between the wide lug portion 17 and the narrow lug portion 18.

A pair of lateral slip preventing protrusions 26 and 27 on the inter-lug recess 11 side are arranged corresponding to the narrow recess 20 or arranged corresponding to a narrow portion of a boundary portion between the narrow recess 20 and the wide recess 21 so that the side lug portions 14 are located in the vicinity in the crawler revolving direction of the lateral slip preventing protrusions 26 and 27. Accordingly, as shown in FIG. 6, around the lateral slip preventing protrusions 26 and 27 on the side lug portion 14 side, a lug top surface 17a of the wide lug portion 17 of the side lug portion 14 extends, and for the lateral slip preventing protrusions 26 and 27 on the inter-lug recess 11 side, the wide lug portions 17 of the side lug portions 14 on both sides are adjacent to each other via lug inclined surfaces 17 in the close vicinity in the crawler revolving direction.

When at least the lateral slip preventing protrusion on one side 26 closer to the central lug portion 13 of the pair of lateral slip preventing protrusions 26 and 27 on the side lug portion 14 side is arranged corresponding to the wide lug portion 17 or the narrow recess 20, the lateral slip preventing protrusion on the other side 27 arranged in the vicinity thereof can be arranged in the wide lug portion 17 or the narrow recess 20 even at a position away from the wide lug portion 17 or the narrow recess 20.

The guide protrusions 25 each integrally includes a base portion 25a of the crawler thickness direction and a rhomboid top portion 25b on the base portion 25a. The rhomboid top portion 25b is formed in a substantially rhomboid shape in plan view. The rhomboid top portions 25b of each core metal 7 each have acute-angled projections projecting to both sides in the crawler revolving direction from the base portion 25a. The top surfaces of respective rhomboid top portions 25b are flat with substantially the same height, and the rhomboid top portions 25b serve as inner track roller rolling paths 32 for rolling of the track rollers 5.

The rhomboid top portion 25b of each guide protrusion 25 overlaps with another in the crawler revolving direction in order to form the inner track roller rolling path 32 uninterruptedly continuing in the crawler revolving direction, and a predetermined distance is provided so that the rhomboid top portions 25b of the guide protrusions 25 do not interfere with each other in the crawler revolving direction even when wound around the driving wheel 2 or the like.

The lateral slip preventing protrusions 26 and 27 project in opposite directions from side surfaces of the intermediate track roller rolling portion 30 on the blade portion 16 to both sides in the crawler revolving direction. The lateral slip preventing protrusions 26 and 27 have base portion sides integrated with the upper surface side 16a of the blade portion 16 of the core metal 7 and are received by the blade portion 16 from below. The lateral slip preventing protrusions 26 and 27 are such that the lateral slip preventing protrusion on one side 26 is located on a side closer to the guide protrusion 25 of the intermediate track roller rolling portion 30 and the lateral slip preventing protrusion on the other side 27 is located on a side farther from the guide protrusion 25 of the intermediate track roller rolling portion 30, and the lateral slip preventing protrusions 26 and 27 of the core metals 7 adjacent to each other in the crawler revolving direction are arranged adjacent to each other in the crawler width direction. Between the tip of each lateral slip preventing protrusion 26, 27 and the intermediate track roller rolling portion 30 of the core metal 7 on the side opposing thereto in the crawler revolving direction, there is a sufficient distance so that the lateral slip preventing protrusion 26, 27 does not interfere with the intermediate track roller rolling portion 30 of the core metal 7 even when the adjacent core metals 7 are bent.

In the lateral slip preventing protrusions 26 and 27 also serving as the track roller rolling portions 28 and 29, lateral slip preventing surfaces 26b and 27b facing each other in the crawler width direction come close to each other in the crawler width direction, and the elastic material 12 of the crawler main body 6 is interposed between the lateral slip preventing protrusions 26 and 27.

As shown in FIG. 4 and FIG. 5, a covering layer 33 of a predetermined thickness is formed along uneven shapes of the core metals 7 on the anti-tread side of the crawler main body 6, such as the engaging portions 15, the guide protrusions 25, the intermediate track roller rolling portions 30, and the track roller rolling portions 28 and 29 are embedded inside the elastic material 12 of the crawler main body 6. Although the covering layer 33 is formed thinly along the uneven shapes of the core metals 7, the covering layer 33 may be omitted so that the uneven shapes of the core metals 7 are exposed.

In order to facilitate bending of the crawler main body 6, the crawler main body 6 is formed with inner recesses 35, outer recesses 36, and connecting recesses 37 on the anti-tread side between the adjacent core metals 7. The inner recesses 35 are arranged on an inner side closer to the engaging holes 9 of the crawler main body 6 and are formed between the engaging holes 9 and the lateral slip preventing protrusions 26 and 27, avoiding the guide protrusions 25. The outer recesses 36 are formed in the crawler width direction on an outer side than the lateral slip preventing protrusions 26 and 27 of the crawler main body 6.

As shown in FIG. 4, the track roller 5 integrally includes small diameter roller portions 39 arranged on the central side in the crawler width direction and large diameter roller portions 40 arranged outside the respective small diameter roller portions 39, and the small diameter roller portions 39 and the large diameter roller portions 40 are configured to roll in the crawler revolving direction respectively on the inner track roller rolling paths 32 of the guide protrusions 25 and on the outer track roller rolling paths 31 such as the track roller rolling portions 28 and 29 of the lateral slip preventing protrusions 26 and 27, respectively.

The elastic crawler 4 of such a configuration has the following advantages. The crawler main body 6 revolves in a forward or backward direction by the drive of the driving wheel 2 while being guided by the track rollers 5 with the crawler main body 6 wound across the driving wheel 2 and the driven wheel 3. Then, the crawler main body 6 travels by the driving force generated when the drive lugs 10 bite into the ground and revolve in the crawler revolving direction.

In addition to the wide lug portion 17 of the side lug portion 14 corresponding to two core metals 7, the drive lugs 10 each have the central lug portion 13 of the crawler width direction between each of the engaging holes 9 in the central portion of the crawler main body 6, so that even the central portion of the crawler main body 6 can reliably grip the ground, and the driving force can be improved while reducing the surface pressure on the treads of the drive lugs 10 by the side lug portions 14 and the central lug portions 13 as compared with the conventional case.

The wide lug portions 17 are each integrally formed with two central lug portions 13 adjacent to each other in the crawler revolving direction, straddling two core metals 7 adjacent to each other in the crawler revolving direction, and located on both sides in the crawler width direction of the central lug portion 13. Thus, the durability of the central lug portions 13 themselves is improved as compared with the case where the central lug portions 13 are independent of the wide lug portions 17, and sufficient driving force can be obtained.

The inter-lug recesses 11 between the wide lug portions 17 each have the narrow recess 20 substantially as narrow as or narrower than the distance between the two central lug portions 13 adjacent to each other in the crawler revolving direction on the side closer to the engaging holes 9, so that the width in the crawler revolving direction of the wide lug portions 17 of the side lug portions 14 adjacent in the crawler revolving direction can be easily secured.

Moreover, the side lug portions 14 have the narrow lug portions 18 narrower than the wide lug portions 17 outside the wide lug portions 17, and the outer sides in the crawler width direction of the narrow recesses 20 are the wide recesses 21 wider than the narrow recesses 20. Thus, the soil removal performance of the crawler main body 6 can be improved even though the wide lug portions 17 are situated in the side lug portions 14 on the side closer to the engaging holes 9.

Each pair of lateral slip preventing protrusions 26 and 27 are situated on the side lug portion 14 side and the inter-lug recess 11 side, and lateral slip between the adjacent core metals 7 in the crawler width direction is prevented by the lateral slip preventing protrusions 26 and 27. Regarding each lateral slip preventing protrusion 26, 27, the following effects can be exerted.

That is, of the lateral slip preventing protrusions 26 and 27 on the side lug portion 14 side, at least the lateral slip preventing protrusion 26 on the central lug portion 13 side corresponds to the wide lug portion 17. Thus, the thickness of the elastic material 12 on the tread sides 26a and 27a of the lateral slip preventing protrusions 26 and 27 can be increased, and vibration can be absorbed accordingly. This effect is further improved by the pair of lateral slip preventing protrusions 26 and 27 on the side lug portion 14 side corresponding to the wide lug portion 17 or corresponding to the wide portion of the boundary portion between the wide lug portion 17 and the narrow lug portion 18.

Further, of the pair of lateral slip preventing protrusions 26 and 27 on the inter-lug recess 11 side, at least the lateral slip preventing protrusion 26 on the central lug portion 13 side corresponds to the narrow recess 20, and on both sides in the crawler revolving direction of the lateral slip preventing protrusion 26, the side lug portions 14 of the drive lugs 10 are situated in the vicinity of the lateral slip preventing protrusions 26 and 27. Thus, the lateral slip preventing protrusions 26 and 27 can be arranged close to the side lug portions 14 on both sides in the crawler revolving direction.

Accordingly, the thickness of the elastic material 12 on the tread sides 26a and 27a of the lateral slip preventing protrusions 26 and 27 can be secured by the side lug portions 14 on both sides in the crawler revolving direction, and vibration can be absorbed in the same manner as the case of the lateral slip preventing protrusions 26 and 27 sides of the side lug portion 14. This effect is further improved by the pair of lateral slip preventing protrusions 26 and 27 on the inter-lug recess 11 side corresponding to the narrow recess 20 or corresponding to the narrow portion in the boundary between the narrow recess 20 and the wide recess 21.

When the crawler main body 6 revolves, as shown in FIG. 4, FIG. 9, and FIG. 10, the small diameter roller portions 39 of the track rollers 5 roll on the inner track roller rolling paths 32 on the guide protrusions 25 in the crawler revolving direction and the large diameter roller portions 40 roll on the outer track roller rolling paths 31 such as the intermediate track roller rolling portions 30 and the track roller rolling portions 28 and 29 in the crawler revolving direction. Thus, the crawler main body 6 can be guided at the four places in the crawler width direction by the track rollers 5. Moreover, the track roller rolling paths 31 and 32 at the four places are continuous in the crawler revolving direction at substantially the same height without interruption between the adjacent core metals 7, so that vertical vibration of the track rollers 5 during rolling can be reduced.

That is, the guide protrusions 25 of respective core metals 7 have the same height, and the inner track roller rolling paths 32 on the guide protrusions 25 are such that the rhomboid top portions 25b overlap each other in the crawler revolving direction between the adjacent core metals 7. Thus, the small diameter roller portions 39 can stably roll, without vibrating vertically, on the inner track roller rolling paths 32 formed on the inner sides in the crawler width direction by the guide protrusions 25.

The intermediate track roller rolling portions 30 and the track roller rolling portions 28 and 29 of the core metals 7 have substantially the same height, and respective track roller rolling portions 28 and 29 overlap each other in the crawler revolving direction. Thus, the large diameter roller portions 40 can stably roll, without vibrating vertically, on the two outer track roller rolling paths 31 formed on the outer sides in the crawler width direction by the intermediate track roller rolling portions 30 and the track roller rolling portions 28 and 29 of respective core metals 7.

Each core metal 7 has the lateral slip preventing protrusions 26 and 27 projecting to both sides in the crawler revolving direction and also serving as the track roller rolling portions 28 and 29, and the lateral slip preventing protrusions 26 and 27 are formed in the horizontally long rectangular shape or horizontally long flat shape, which is different from the conventional structure. Thus, there are the following advantages.

Respective lateral slip preventing protrusions 26 and 27 bend together with the elastic material 12 surrounding the lateral slip preventing protrusions 26 and 27 within the elastic material 12 when the crawler main body 6 bends. However, the lateral slip preventing protrusions 26 and 27 each have the horizontally long rectangular shape or horizontally long flat shape in which the dimension B in the crawler width direction from the lateral slip preventing surface side 26b, 27b to the anti-lateral slip preventing surface side 26c, 27c is longer than the dimension A from the tread side 26a, 27a of the lateral slip preventing protrusion 26, 27 to the outer track roller rolling path 31, and the dimension A from the tread side 26a, 27a to the track roller rolling portion 28 to 30 is thin as compared with the conventional case. Thus, the lateral slip preventing protrusions 26 and 27 can bend together with the elastic material 12 without any difficulty, and the bendability of the crawler main body 6 can be improved even though the side lug portions 14 of the drive lugs 10 have the wide lug portions 17 straddling two adjacent core metals 7.

Accordingly, as compared with the conventional structure, not only can the generation of cracks in the elastic material 12 of the crawler main body 6 be reduced, but also the material thickness of the elastic material 12 constituting the side lug portions 14 can be increased on the tread sides 26a and 27a of the lateral slip preventing protrusions 26 and 27, and there is an advantage that the vibration absorption effect by the elastic material 12 is improved. Since the material thickness of the elastic material 12 constituting the side lug portions 14 can be increased on the tread sides 26a and 27a of the lateral slip preventing protrusions 26 and 27, the pressure on the elastic material 12 between the lateral slip preventing protrusions 26 and 27 and the ground can be reduced, and damage, etc., to the elastic material 12 of the side lug portions 14 can be easily prevented.

Since each lateral slip preventing protrusion 26, 27 is formed in the horizontally long rectangular shape or horizontally long flat shape in which the dimension B in the crawler width direction from the lateral slip preventing surface side 26b, 27b to the anti-lateral slip preventing surface side 26c, 27c is long, the dimension in the crawler width direction of the track roller rolling portion 28, 29 can be easily ensured as compared with the case where the dimension in the thickness direction of the crawler main body 6 is long. Accordingly, it is possible to increase the track roller width in the crawler width direction of the large diameter roller portions 40 and also to increase the distance in the crawler width direction between the large diameter roller portions 40, and the crawler main body 6 can be prevented from tilting in the crawler width direction.

Between the tip of each lateral slip preventing protrusion 26, 27 and the intermediate track roller rolling portion 30 of the core metal 7 on the crawler revolving direction side opposing thereto, there is a gap as large as or larger than the dimension in the crawler width direction of each lateral slip preventing protrusion 26, 27, so that the elastic material 12 can be prevented from being pressed in this part.

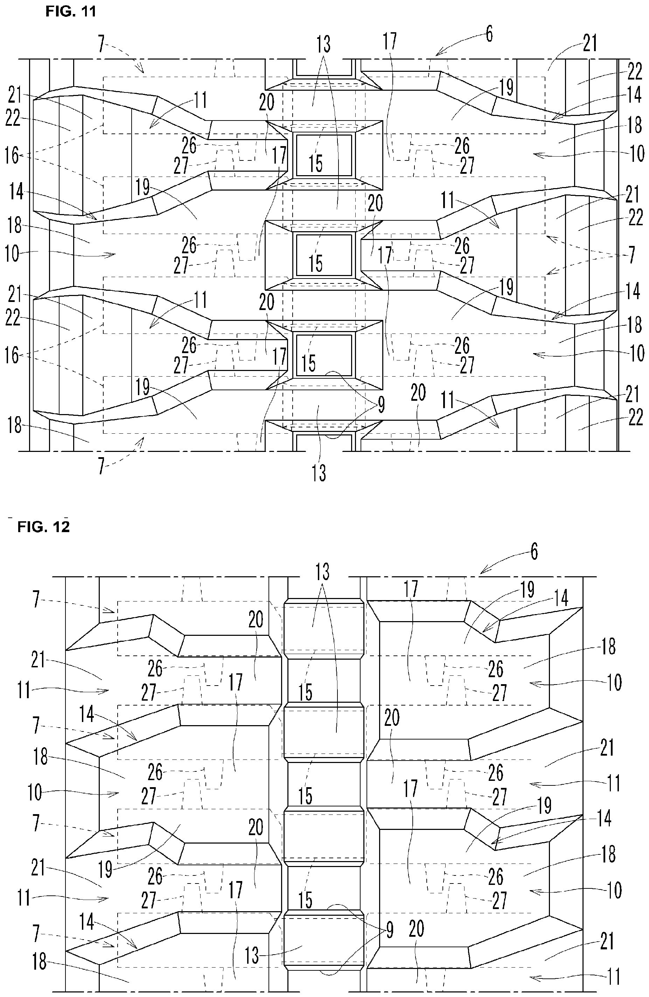

FIG. 11 illustrates a second embodiment of the present invention. In this embodiment, the lateral slip preventing protrusions 26 and 27 on the side lug portion 14 side are arranged within the area in the crawler width direction of the wide lug portion 17, and the lateral slip preventing protrusions 26 and 27 on the inter-lug recess 11 side are arranged within the area in the crawler width direction of the narrow recess 20.

When the distance in the crawler width direction between the outer track roller rolling paths 31 is narrow as described above, each lateral slip preventing protrusion 26, 27 can also be provided within the area of the wide lug portion 17 or the narrow recess 20.

FIG. 12 illustrates a third embodiment of the present invention. When the drive lugs 10 of the crawler main body 6 each have a central lug portion 13 and a side lug portion 14, as shown in FIG. 12, the side lug portion 14 can also be provided such that the narrow lug portion 18 is bent to one side in the crawler revolving direction with respect to the wide lug portion 17. Therefore, the side lug portion 14 is not limited to one in which the wide lug portion 17 and the narrow lug portion 18 are provided linearly in the crawler width direction as illustrated in the first and second embodiments.

For example, as in the third embodiment, the wide lug portion 17 and the narrow lug portion 18 can be configured to be bent in the middle of the side lug portion 14, and also the side lug portion 14 can be provided obliquely inclined with respect to the central lug portion 13. It goes without saying that the inter-lug recess 11 of the crawler main body 6 is bent corresponding to the shape of the side lug portion 14.

In this third embodiment, as shown in FIG. 12, the lateral slip preventing protrusions 26 and 27 on the side lug portion 14 side are arranged corresponding to the wide lug portion 17, and the lateral slip preventing protrusions 26 and 27 on the inter-lug recess 11 side are arranged corresponding to the narrow recess 20.

In this way, the wide lug portions 17 can be arranged corresponding to the lateral slip preventing protrusions 26 and 27 on the side lug portion 14 side and the narrow recesses 20 can be arranged corresponding to the lateral slip preventing protrusions 26 and 27 on the inter-lug recess 11 side. With this configuration, there are advantages that the elastic material 12 on the tread sides 26a and 27a can be prevented from being damaged regardless of whether on the side lug portion 14 side or the inter-lug recess 11 side and the durability of the crawler main body 6 is further improved.

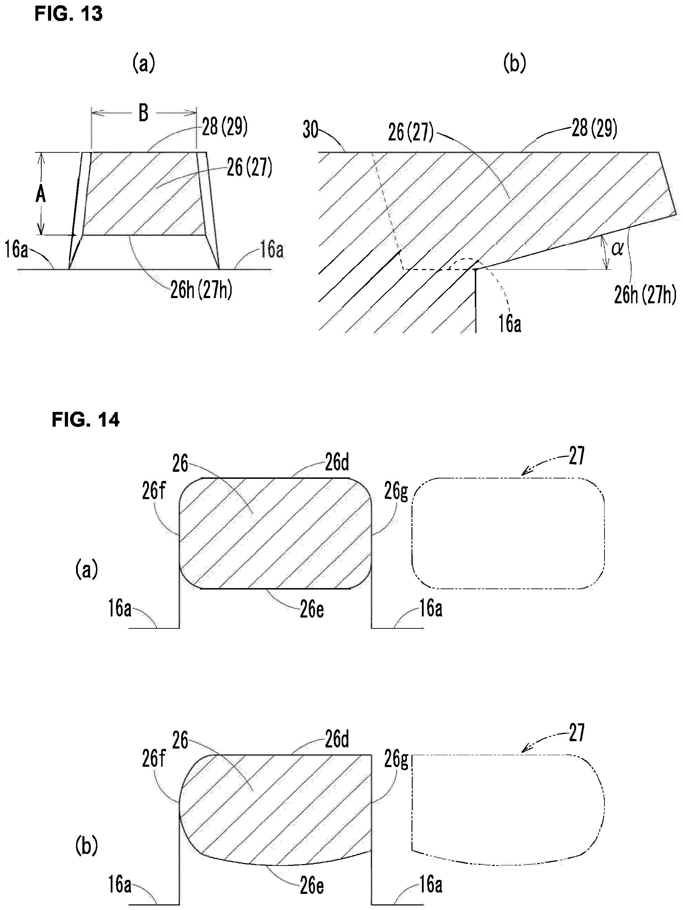

FIG. 13 illustrates a fourth embodiment of the present invention. As shown in FIG. 13(a) and FIG. 13(b), it is desirable that the lateral slip preventing protrusion 26, 27 has a horizontally long rectangular shape or horizontally long flat shape in which the dimension B in the crawler width direction is large with respect to the dimension A in the thickness direction of the crawler main body 6, and that the track roller rolling portion 28, 29 is formed on the anti-tread side of the lateral slip preventing protrusion 26, 27, and that the tread side 26a, 27a is an inclined surface 26h, 27h with a rising tip. As shown in FIG. 13(b), the inclined surface 26h, 27h in this case can have a large angle α with respect to a line segment parallel to the track roller rolling portion 28, 29. The extension line of the inclined surface 26h may be configured to pass through the center or the vicinity of the center of the tilting movement of the core metal 7 within the elastic material 12 when the crawler main body 6 is bent.

FIG. 14 illustrates a fifth embodiment of the present invention. The core metals 7 are generally made by forging or casting, and at the time of manufacturing by forging, it is desirable to provide a draft of the mold to each portion of the core metals 7, such as forming the lateral slip preventing protrusions 26 and 27 in a trapezoidal shape. However, the drafts do not have to be provided when the mold can be removed.

For example, in the horizontally long rectangular shaped or horizontally long flat shaped lateral slip preventing protrusion 26, as shown in FIG. 14(a), it can also be configured such that respective opposing surfaces of the upper side 26d, lower side 26e, left side 26f, and right side 26g are made substantially parallel in the crawler width direction and the crawler thickness direction and four corners between each of the opposing surfaces are rounded.

Further, in the lateral slip preventing protrusion 26, as shown in FIG. 14(b), it can also be configured such that, of the upper side 26d, lower side 26e, left side 26f, and right side 26g, the upper side 26d serving as the track roller rolling portion 28 and the right side 26g serving as the lateral slip preventing surface side 26b are formed into a flat surface or nearly flat surface and the other left side 26f and lower side 26e are formed to have an arc shape or other curved shape.

As stated above, each embodiment of the present invention has been described in detail, but the present invention should not be limited to the embodiments and various changes can be made. For example, in the embodiments, the drive lugs 10 constituting two left and right rows of lugs on the tread side on an outer periphery of the crawler main body 6 are provided. However, the shape, structure, and arrangement of the drive lugs 10 can be changed arbitrarily.

In the first embodiment, the track rollers 5 having the small diameter roller portions 39 and the large diameter roller portions 40 are employed. However, the track rollers 5 may have left and right large diameter roller portions 40. Further, left and right track rollers 5 may be provided separately. The lateral slip preventing protrusions 26 and 27 only need to have a horizontally long shape such as a horizontally long rectangular shape or horizontally long flat shape in which the dimension B is longer than the dimension A, and various cross-sectional shapes can be selected within the scope of the concept of the horizontally long shape.

It is desirable that the lateral slip preventing protrusions 26 and 27 corresponding to the side lug portion 14 are arranged within the area of the wide lug portion 17 and the lateral slip preventing protrusions 26 and 27 corresponding to the inter-lug recess 11 are arranged within the area of the narrow recess 20. However, when the distance in the crawler width direction between the outer track roller rolling paths 31 is wide, the lateral slip preventing protrusions 26 and 27 corresponding to the side lug portion 14 may be arranged at a wide portion on the side closer to the wide lug portion 17 in the boundary portion between the wide lug portion 17 and the narrow lug portion 20, and the lateral slip preventing protrusions 26 and 27 corresponding to the inter-lug recess 11 may be arranged at a narrow portion on the side closer to the narrow recess 20 in the boundary portion between the narrow recess 20 and the wide recess 21.

### DESCRIPTION OF REFERENCE NUMERALS

- 4: Elastic crawler
- 5: Track roller
- 6: Crawler main body
- 7: Core metal
- 9: Engaging hole
- 10: Drive lug
- 11: Inter-lug recess
- 12: Elastic material
- 13: Central lug portion
- 14: Side lug portion
- 15: Engaging portion
- 16: Blade portion
- 17: Wide lug portion
- 17a: Lug top surface
- 17b: Lug inclined surface
- 18: Narrow lug portion
- 19: Boundary lug portion
- 20: Narrow recess
- 21: Wide recess
- 25: Guide protrusion
- 26: Lateral slip preventing protrusion on one side
- 27: Lateral slip preventing protrusion on the other side
- 28, 29: Track roller rolling portion
- 30: Intermediate track roller rolling portion
- 31: Outer track roller rolling path
- 32: Inner track roller rolling path

## Claims

1. An elastic crawler including a crawler main body mainly composed of an elastic material, and core metals embedded at substantially equal intervals in a crawler revolving direction inside the crawler main body, the core metals each having an engaging portion that is arranged between engaging holes of the crawler main body, guide protrusions that are arranged on both sides in a crawler width direction with respect to the engaging portion, a lateral slip preventing protrusion on one side that projects to one side in a crawler revolving direction on an outer side in the crawler width direction with respect to each of the guide protrusions, and a lateral slip preventing protrusion on the other side that projects to the other side in the crawler revolving direction on the outer side in the crawler width direction with respect to each of the guide protrusions and prevents lateral slip of the core metals to the crawler width direction between itself and the lateral slip preventing protrusion on one side on the core metal side adjacent thereto, the lateral slip preventing protrusion on one side and the lateral slip preventing protrusion on the other side having anti-tread sides formed into track roller rolling portions,
wherein an intermediate track roller rolling portion is provided on the core metal between the lateral slip preventing protrusion on one side and the lateral slip preventing protrusion on the other side, and
wherein each of the lateral slip preventing protrusions has a horizontally long shape in which a dimension in the crawler width direction from a lateral slip preventing surface side to an anti-lateral slip preventing surface side is longer than a dimension from a tread side to the track roller rolling portion.

2. The elastic crawler according to claim 1, wherein the track roller rolling portion of the lateral slip preventing protrusion on one side and the track roller rolling portion of the lateral slip preventing protrusion on the other side have their tip sides overlapping each other in the crawler revolving direction.

3. The elastic crawler according to claim 1, wherein the intermediate track roller rolling portion is provided in a projecting manner on a blade portion of the core metal between the lateral slip preventing protrusion on one side and the lateral slip preventing protrusion on the other side, and
wherein each of the lateral slip preventing protrusions has a base portion side integrated with an upper surface of the blade portion and a side surface of the intermediate track roller rolling portion, and
wherein the tread side of each of the lateral slip preventing protrusions is an inclined surface inclined upward toward a tip thereof.

## Amended claims

### Amended claims in accordance with Rule 137(2) EPC.

1. An elastic crawler including a crawler main body (6) mainly composed of an elastic material, and core metals (7) embedded at substantially equal intervals in a crawler revolving direction inside the crawler main body (6), the core metals (7) each having an engaging portion (15) that is arranged between engaging holes (9) of the crawler main body (6), guide protrusions (25) that are arranged on both sides in a crawler width direction with respect to the engaging portion (15), a lateral slip preventing protrusion on one side (26) that projects to one side in a crawler revolving direction on an outer side in the crawler width direction with respect to each of the guide protrusions (25), and a lateral slip preventing protrusion on the other side (27) that projects to the other side in the crawler revolving direction on the outer side in the crawler width direction with respect to each of the guide protrusions (25) and prevents lateral slip of the core metals (7) to the crawler width direction between itself and the lateral slip preventing protrusion on one side (26) on the core metal (7) side adjacent thereto, the lateral slip preventing protrusion on one side (26) and the lateral slip preventing protrusion on the other side (27) having anti-tread sides formed into track roller rolling portions (28), **characterized in that**
an intermediate track roller rolling portion (30) is provided on the core metal (7) between the lateral slip preventing protrusion on one side (26) and the lateral slip preventing protrusion on the other side (27), and
each of the lateral slip preventing protrusions (26), (27) has a horizontally long shape in which a dimension in the crawler width direction from a lateral slip preventing surface side (26b), (27b) to an anti-lateral slip preventing surface side (26c), (27c) is longer than a dimension from a tread side (26a), (27a) to the track roller rolling portion (28), and
the crawler main body (6) has drive lugs (10) forming treads and including central lug portions (13) and side lug portions (14), and
the central lug portions (13) are each arranged in the crawler width direction between each of the engaging holes (9), and
the side lug portions (14) are arranged alternately on one side in the crawler width direction, corresponding to the central lug portions (13) on both sides in the crawler revolving direction of each of the engaging holes (9).

2. The elastic crawler according to claim 1, **characterized in that** the track roller rolling portion (28) of the lateral slip preventing protrusion on one side (26) and the track roller rolling portion (28) of the lateral slip preventing protrusion on the other side (27) have their tip sides overlapping each other in the crawler revolving direction.

3. The elastic crawler according to claim 1, **characterized in that** the intermediate track roller rolling portion (30) is provided in a projecting manner on a blade portion (16) of the core metal (7) between the lateral slip preventing protrusion on one side (26) and the lateral slip preventing protrusion on the other side (27), and
each of the lateral slip preventing protrusions (26), (27) has a base portion side integrated with an upper surface of the blade portion (16) and a side surface of the intermediate track roller rolling portion (30), and
the tread side (26a), (27a) of each of the lateral slip preventing protrusions (26), (27) is an inclined surface (26h), (27h) inclined upward toward a tip thereof.
